**Europäisches Patentamt**

(19) **European Patent Office**

**Office européen des brevets**

(11) Numéro de publication: **0 001 150**
**B1**

(12) **FASCICULE DE BREVET EUROPEEN**

(45) Date de publication du fascicule du brevet:
**25.01.84**

(21) Numéro de dépôt: **78200177.0**

(22) Date de dépôt: **07.09.78**

(51) Int. Cl.³: **C 08 F 6/02,** C 08 F 10/00

(54) Procédé pour la séparation des polyoléfines fabriquées à basse pression, comprenant l'addition de monoxyde de carbone au mélange réactionnel.

(30) Priorité: **12.09.77 FR 7727700**

(43) Date de publication de la demande:
**21.03.79 Bulletin 79/6**

(45) Mention de la délivrance du brevet:
**25.01.84 Bulletin 84/4**

(84) Etats contractants désignés:
**BE CH DE FR GB LU NL SE**

(56) Documents cités:
**FR - A - 2 274 633**

**R.A.V. RAFF et K.W. DOAK: "Crystal-1-4 line Olefin Polymers", 1965, JOHN WILEY and Sons. Inc. vol. I, page 371 d. CATALYST POISONS, lignes 6-21**
**RAPRA, 42C II-9, pp.7-9**
**Hydrocarbon processing, juillet 1972- pp. 115-116**
**Hydrocarbon processing, novembre 1972-pp. 97-98**
**Kunststoff-Handbuch, IV, 1969 pp. 77-89**
**Ullmanns Encyclopädie des Technischen Chemie, 4. Ed. Vol. 19-pp. 178-184**

(73) Titulaire: **SOLVAY & Cie (Société Anonyme), Rue du Prince Albert, 33, B-1050 Bruxelles (BE)**

(72) Inventeur: **Cuypers, Hervé, Avenue des Fauvettes, 1, B-1341 Céroux-Mousty (BE)**
Inventeur: **Baekelmans, Paul, Chemin Sainte-Anne, 16, B-1320 Genval (BE)**

ACTORUM AG

Procédé pour la séparation des polyoléfines fabriquées à basse pression, comprenant l'addition de monoxyde de carbone au mélange réactionnel

La présente invention concerne un procédé pour la séparation des polyoléfines, fabriquées à basse pression en présence d'un catalyseur comprenant un composé chloré du titane et un activateur organométallique, à partir du mélange réactionnel provenant de la polymérisation.

On sait que les alpha-oléfines peuvent être polymérisées par exemple en présence de catalyseurs à base de composés chlorés du titane et de composés organométalliques, connus de l'homme de métier sous le nom de catalyseurs Ziegler.

On dispose maintenant de pareils catalyseurs, dits superactifs, dont l'activité catalytique est suffisamment élevée pour que l'on puisse éliminer l'opération jadis indispensable, consistant à épurer les polymères obtenus des résidus catalytiques qu'ils contiennent lors de la fabrication des polyoléfines à basse pression telles que le polyéthylène à haute densité et le polypropylène isotactique.

Il reste néanmoins souhaitable, quand on emploie ces catalyseurs superactifs, de désactiver les catalyseurs qui restent en présence du monomère qui n'a pas réagi, après l'étape de polymérisation proprement dite. En effet, si on n'opère pas cette désactivation, il se produit une post-polymérisation dans les installations situées en aval de l'enceinte de polymérisation.

Comme ce type de polymérisation est généralement opéré à une pression supérieure à la pression atmosphérique, et que le mélange réactionnel provenant de la polymérisation est ensuite soumis le plus souvent à une détente pour faciliter la récupération du monomère qui n'a pas réagi, la post-polymérisation au cours de cette détente est une source d'inconvénients sérieux.

En effet, les conditions physico-chimiques qui règnent au cours de cette détente sont différentes de celles régnant dans l'enceinte de polymérisation. En particulier, la température, la pression et la concentration des constituants du milieu sont différentes: ceci entraîne la formation de polymères n'ayant pas du tout les mêmes caractéristiques que le polymère fabriqué, et on constate dès lors des hétérogénéités de composition, de propriétés et d'aspect de surface de ce dernier.

Le problème est particulièrement critique dans le cas, très fréquent, de procédés de polymérisation faisant intervenir un agent de réglage du poids moléculaire moyen du polymère (l'hydrogène étant le plus fréquemment utilisé à cette fin) et un catalyseur sensible à l'action de cet agent de réglage.

Dans ces conditions, en effet, la pression de la zone de détente étant inférieure à celle de l'enceinte de polymérisation, le rapport des concentrations de l'hydrogène et du monomère résiduel est plus faible dans cette zone que dans l'enceinte de polymérisation. Si la post-polymérisation n'est pas empêchée dans la zone de détente, il s'y forme des polymères de poids moléculaire beaucoup plus élevé que le poids moléculaire moyen du polymère fabriqué.

La présence de ces polymères d'un très hauts poids moléculaires rend le polymère impropre à la fabrication de produits tels que des films ou des fibres.

On a déjà proposé l'addition d'un inhibiteur de polymérisation au mélange réactionnel provenant de la polymérisation et contenant le catalyseur et le monomère qui n'a pas réagi.

C'est ainsi qu'on a déjà proposé d'ajouter de l'eau comme agent de désactivation liquide à ce mélange, en particulier dans la zone de détente sus-mentionnée (Hydrocarbon Processing, juillet 1972, pages 115 et 116). Cette technique n'est toutefois pas satisfaisante lorsque le milieu organique contient un diluant hydrocarboné liquide. En effet, il se forme, dans ces conditions, une phase organique et une phase aqueuse distinctes, ce qui rend difficile la récupération correcte du polymère par les moyens physiques traditionnels de séparation tels que la centrifugation. En outre, lorsque les catalyseurs utilisés comprennent des halogénures de métaux de transition, cette addition d'eau provoque leur hydrolyse avec libération d'halogénures acides corrosifs. On a essayé de neutraliser ces halogénures acides corrosifs. On a essayé de neutraliser ces halogénures acides en utilisant, non pas de l'eau comme agent de désactivation, mais une solution aqueuse d'un composé alcalin, le plus fréquemment la soude; toutefois, lorsque le catalyseur utilisé comprend un composé organométallique d'un métal amphotère (le plus souvent un composé organoaluminique), la présence du composé alcalin fait monter le pH du milieu et entraîne la précipitation d'hydroxyde de métal amphotère (aluminium), avec pour conséquence, la formation de croûtes dans les installations et la présence d'une phase solide, conjointement aux phases organique et aqueuse sus-mentionnées, ce qui complique encore davantage la récupération du polymère.

On pourrait tenter d'éviter la présence de deux phases liquides distinctes, en ne dépassant pas la valeur de solubilité de l'eau dans le diluant hydrocarboné ou en faisant usage de vapeur d'eau. Dans ces conditions, on ne parvient toutefois pas à éviter une corrosion importante, qui se manifeste surtout dans les installations de récupération du diluant hydrocarboné et du monomère résiduel.

D'autres agents de désactivation liquides, traditionnellement utilisés pour l'épuration des polyoléfines en résidus catalytiques tels que les alcools, les dicétones, les oxydes d'alkylènes, etc. [Kunststoff-Handbuch, vol. IV, pages 81–84 (1969)], ne peuvent pas convenir non plus lorsque l'activité du catalyseur utilisé est telle qu'elle permet justement d'éviter cette épuration. En effet, la nécessité de récupérer ces agents réduit à néant l'économie réalisée grâce à l'emploi de ce type de catalyseur.

La Demanderesse a trouvé qu'aucun résultat vraiment satisfaisant n'est enregistré non plus lorsque l'on substitue des agents de désactivation gazeux connus aux agents de désactivation liquides.

Ainsi, l'introduction d'oxygène dans le mélange réactionnel provenant de la polymérisation présente des danges, eu régard aux mélanges explosifs ou inflammables que ce dernier peut créer avec le monomère résiduel ou avec le diluant hydrocarboné liquide. L'ammoniac confère une coloration indésirable au polymère final. L'hémioxyde d'azote doit être mis en œuvre en quantités très importantes pour empêcher efficacement la post-polymérisation. Enfin, le dioxyde de carbone doit également être employé en quantités très importantes pour arrêter effectivement la polymérisation. De plus, sa température de solidification, relativement élevée sous pression, entraîne des difficultés technologiques telles que des bouchages au cours de la récupération du monomère non réagi, en particulier lorsque cette dernière est pratiquée par distillation sous pression.

La Demanderesse a trouvé à présent un procédé qui ne présente plus les inconvénients mentionnés ci-dessus et n'en entraîne aucun autre.

La présente invention concerne donc un procédé pour la séparation des polyoléfines, fabriquées à basse pression en présence d'un catalyseur comprenant un composé chloré du titane, du mélange réactionnel provenant de la polymérisation et contenant la polyoléfine, le monomère qui n'a pas réagi et le catalyseur mis en œuvre à la polymérisation, selon lequel on récupère le monomère qui n'a pas réagi en soumettant le mélange réactionnel provenant de la polymérisation à une détente en présence d'un agent de désactivation du catalyseur et on sépare la polyoléfine sans l'épurer en résidus catalytiques (FR-A-2274633). La présente invention concerne l'utilisation du monoxyde de carbone comme agent de désactivation.

Le procédé selon l'invention est applicable à n'importe quelle polyoléfine polymérisée à basse pression à l'intervention d'un catalyseur comprenant un composé chloré du titane et un composé organométallique, et plus particulièrement un composé organoaluminique.

Les polyoléfines qui peuvent être séparées selon l'invention sont en général obtenus à partir d'alpha-oléfines dont la molécule contient de 2 à 18, et de préférence de 2 à 6, atomes de carbone telles que l'éthylène, le propylène, le n-butène-1, le n-pentène-1, les méthylbutènes-1, le n-hexène-1 et les 3- et 4-méthylpentènes-1. Le procédé selon l'invention est particulièrement intéressant dans le cas des polyoléfines cristallines, telles que le polyéthylène à haute densité et les polymères isotactiques du propylène, du butène-1 et du 4-méthylpentène-1. Ces polyoléfines peuvent être aussi bien des homopolymères que des copolymères obtenus par copolymérisation des oléfines dont il est question ci-dessus entre elles ainsi qu'avec des dioléfines comprenant de 4 à 18 atomes de carbone. De préférence, les dioléfines mises en œuvre dans les copolymères sont des dioléfines aliphatiques non conjuguées telles que l'hexadiène-1,4, des dioléfines monocycliques non conjuguées telles que le 4-vinylcyclohexène, des dioléfines alicycliques ayant un pont endocyclique telles que le dicyclopentadiène, le méthylène- et l'éthylène-norbornène, et des dioléfines aliphatiques conjuguées telles que le butadiène ou l'isoprène.

Les polyoléfines auxquelles l'invention s'applique peuvent être fabriquées selon n'importe quel procédé connu: par polymérisation en solution ou en suspension dans un diluant hydrocarboné inerte ou encore par polymérisation en phase gazeuse.

Lorsque la polymérisation est effectuée en phase gazeuse, on utilise avantageusement des réacteurs dans lesquels la masse réactionnelle est fluidisée par un courant gazeux de monomère. Lorsque la polymérisation est effectuée en suspension dans les monomères liquides ou au sein d'un diluant liquide hydrocarboné inerte, on préfère opérer dans un réacteur qui est constitué d'une ou plusieurs enceintes fermées munies de moyens d'agitation et de dispositifs pour l'évacuation des calories. Les réacteurs peuvent être du type tubulaire ou à cuve. Il peut aussi s'agir de réacteurs tubulaires en boucle fermée, dans lesquels la circulation du milieu liquide est assurée par une pompe axiale. Dans le cas de plusieurs enceintes fermées, ces dernières peuvent être disposées en parallèle ou connectées en série. Ces enceintes sont équipées de conduites pour l'introduction de constituants du milieu de polymérisation et pour le prélèvement de l'effluent. La polymérisation peut être effectuée en continu ou en discontinu. Lorsqu'on fait usage d'un diluant liquide hydrocarboné inerte, ce dernier est choisi généralement parmi les hydrocarbures aliphatiques ou cycloaliphatiques tels que le butane, le pentane, l'hexane, l'heptane, le cyclohexane, le méthylcyclohexane ou leurs mélanges. Le diluant peut également être avantageusement le monomère à polymériseur lui-même, maintenu à l'état liquide, par exemple le propylène liquide. La température et la pression de polymérisation sont choisies en fonction du ou des monomères à polymériser et du type de polymérisation retenu. Elles sont généralement choisies respectivement entre 20 et 200°C et entre la pression atmosphérique et 50 atmosphères. Dans le cas particulier de la polymérisation du propylène en suspension dans un diluant particulier de la polymérisation du propylène en suspension dans un diluant hydrocarboné inerte, elles sont choisies de préférence respectivement entre 50 et 80°C et entre 10 et 40 atmosphères, la pression étant bien entendu fonction de la température utilisée. Enfin, la polymérisation peut être effectuée en présence d'autres additifs tels que des agents de réglage du poids moléculaire, comme par exemple l'hydrogène.

Selon l'invention, le monoxyde de carbone est ajouté au mélange réactionnel provenant de la polymérisation. Ce mélange contient la polyoléfine, le monomère qui n'a pas réagi et le cataly-

seur mis en œuvre à la polymérisation. Il peut également contenir du diluant liquide hydrocarboné inerte ainsi que de l'agent de réglage du poids moléculaire.

L'état physique de ce mélange au moment de l'addition du monoxyde de carbone dépend du type de polymérisation et des traitement que l'on fait subir à ce mélange après la polymérisation. Il comprend le plus souvent une phase solide constituée généralement des particules de polyoléfines contenant le catalyseur et une phase liquide et/ou gazeuse comprenant les autres constituants et notamment le monomère qui n'a pas réagi, dont une certaine quantité peut cependant être absorbée par (ou adsorbée sur) les particules de polyoléfines. Les particules peuvent se trouver en suspension dans la phase liquide et/ou gazeuse ou être simplement en contact avec elle sans y être dispersées.

Dans certains cas particuliers la phase solide peut avoir d'autres formes que des particules. C'est le cas par exemple lorsqu'une solution de polyoléfine est soumise à une détente brusque dans certaines conditions de température, de pression, et de concentration de manière à solidifier la polyoléfine sous forme de fibrilles. L'invention est applicable mutatis mutandis à ces cas particuliers également.

L'addition du monoxyde de carbone au mélange réactionnel peut se faire à n'importe quel moment entre la polymérisation et la fin de la séparation des particules de polyoléfines des autres constituants du mélange réactionnel c'est-à-dire le moment où la polyoléfine de la phase solide n'est plus du tout en contact avec le monomère présent dans la phase liquide et/ou gazeuse. Lorsque le mélange réactionnel est soumis à une détente, le monoxyde de carbone est de préférence ajouté à la détente. Cette détente peut être effectuée en une seule étape ou en plusieurs étapes à des pressions intermédiaires décroissantes. On peut y ajouter un supplément de dilant hydrocarboné liquide inerte, de la vapeur d'eau pour l'entraînement du monomère résiduel, des additifs usuels des polymères tels que des stabilisants, des lubrifiants, des agents renforçants et des matières de charge.

Selon l'invention, le monoxyde de carbone peut être mis en œuvre substantiellement pour ou mélangé avec d'autres corps tels qu'un support solide, sur lequel le monoxyde de carbone est adsorbé ou dans lequel il est adsorbé, ou un gaz, de préférence inerte, avec lequel il est mélangé, ou un liquide dans lequel il est dissous. On peut éventuellement le mélanger avec un autre poison connu du catalyseur. Pour faciliter le dosage et le contrôle de la quantité de monoxyde de carbon à introduire, on préfère le mélanger à un gaz inerte tel que l'azote, le mélange étant alors à l'état gazeux dans les conditions de son addition. Les proportions respectives de gaz inerte et de monoxyde de carbone sont quelconques. Pour des raisons de sécurité, on peut réaliser par exemple un mélange contenant de 5 à 20 % en volume environ de monoxyde de carbone dans le gaz inerte.

La quantité de monoxyde de carbone qu'il y a lieu d'ajouter au mélange réactionnel dépend évidemment de son pouvoir d'empoisonner le catalyseur utilisé; cette quantité peut être déterminée aisément par l'homme de métier, compte tenu du fait qu'il est souhaitable d'arrêter complètement la polymérisation en un laps de temps aussi court que possible. L'introduction d'une quantité supérieure à celle qui est nécessaire pour arrêter complètement la polymérisation est toutefois sans inconvénient. En effet, un avantage très important de l'invention provient de ce que même l'addition d'une forte quantité de monoxyde de carbone ne confère aucune coloration indésirable au polymère et ne complique en rien la séparation ultérieure de cet agent du monomère qui n'a pas réagi.

En général, il est suffisant pour arrêter complètement la polymérisation, d'ajouter, par mole de composé de titane, une quantité d'environ 0,1 mole de monoxyde de carbone. Avec des catalyseurs superactifs à base de trichlorures de titane, tels que ceux décrits dans le brevet belge 780 758 déposé le 16.3.1972 au nom de la Demanderesse, cette quantité correspond approximativement à une concentration de 2 volumes par million par rapport au monomère.

La phase solide comprenant la polyoléfine peut être séparée de la phase liquide au moyen de n'importe quelle technique convenant pour cette opération et, par exemple, par filtration, par centrifugation ou par décantation. Le polymère luimême peut subir des traitements conventionnels, entre autres, pour le séparer du diluant hydrocarboné liquide inerte éventuellement encore présente, et pour le sécher, le stabiliser, et le granuler. Quant au monomère, il peut également être récupéré et purifié de manière connue, par exemple par distillation sous pression. Dans ce cas, l'utilisation comme agent de désactivation, de monoxyde de carbone à l'état gazeux, se révèle particulièrement avantageuse, eu égard à la facilité avec laquelle on peut le séparer du milieu. En outre, eu égard aux quantités très faibles de cet agent qui sont nécessaires pour assurer l'arrêt complet de la polymérisation, aucun problème de toxicité ou de nuisance pour l'environnement n'est à redouter.

Comme mentionné plus haut, le procédé suivant l'invention permet, de manière simple et élégante, d'éviter la post-polymérisation des alphaoléfines dans les installations situées en aval de l'enceinte de polymérisation, et les inconvénients importants qu'entraîne cette post-polymérisation.

Les polyoléfines soumises au procédé suivant l'invention conviennent pour toutes les applications habituelles de ces produits et notamment les plus sévères en ce qui concerne leur homogénéité comme la fabrication de films et de fibres.

L'invention est illustrée par l'exemple suivant.

Exemple

On polymérise en continu, dans un réacteur complètement rempli de liquide pourvu de dispositifs d'agitation et de refroidissement, du propylène dissous dans de l'hexane technique, à une température de 70°C et sous une pression de 40 kg/cm², en présence d'un système catalytique comprenant des particules d'un trichlorure de titane superactif dont la préparation est décrite à l'exemple 1 du brevet belge 780758 déposé le 16.3.1972 au nom de la Demanderesse et un alkylaluminium chloré, et de l'hydrogène comme agent modificateur du poids moléculaire. La polymérisation est conduite de manière que l'on soutire, par heure, du réacteur, un mélange réactionnel comprenant 5000 l d'hexane dans lesquels sont suspendus 1000 kg de polypropylène essentiellement isotactique. La productivité du système catalytique utilisé est telle que le polypropylène contient environ 35 mg de titane par kg. Cette teneur correspond approximativement à 0,73 atome-gramme de titane introduit par heure dans le réacteur. Par ailleurs, la concentration en hydrogène du milieu de polymérisation est réglée de manière à obtenir un polypropylène dont l'indice de fluidité, représentatif du poids moléculaire moyen est mesuré selon la norme ASTM D1238 sous une charge de 2,16 kg à 230°C, est d'environ 10 dg/10 min. On obtient ainsi un polypropylène particulièrement apte à la transformation en films par mise en œuvre par les méthods classiques d'extrusion.

Le mélange réactionnel issu du réacteur de polymérisation est détendu dans une cuve à un pression de 5,5 kg/cm² abs. On introduit dans la cuve de détente, 50 l normaux par heure d'un mélange d'azote et de monoxyde de carbone, contenant 10% en volume de ce dernier. Cette quantité est nettement supérieure à la quantité nécessaire pour désactiver le catalyseur. En effet, compte tenu de la teneur en catalyseur du milieu organique et de l'efficacité du monoxyde de carbone, on constate que, dans les conditions sus-mentionnées, 16 l normaux par heure du susdit mélange (soit 1,6 l normal de CO/heure) sont suffisantes pour arrêter complètement la polymérisation.

La suspension issue de la cuve de détente est ensuite traitée de manière conventionnelle pour recueillir le polymère fabriqué. Ce polymère, stabilisé et granulé de manière connue, a été mis en œuvre par extrusion pour fabriquer un film de 200 microns d'épaisseur. Un examen d'un échantillon de ce film montre qu'il répond largement aux spécifications les plus exigeantes définies pour ce type d'article.

A titre de comparaison, on répète la fabrication du polypropylène identifié ci-dessus, à la seule exception qu'on n'introduit pas de mélange d'azote et de monoxyde de carbone dans la cuve de détente.

Le polymère recueilli est stabilisé, granulé et transformé en film comme indiqué ci-dessus.

L'examen d'un échantillon de dimensions identiques à l'échantillon décrit plus haut révèle la présence de 1000 hétérogénéités environ, ce qui rend bien entendu le film de polypropylène dont cet échantillon est issu totalement inacceptable pour les applications normales de ce type d'articles.

## Revendications

1. Procédé pour la séparation des polyoléfines, fabriquées à basse pression en présence d'un catalyseur comprenant un composé chloré du titane, du mélange réactionnel provenant de la polymérisation et contenant la polyoléfine, le monomère qui n'a pas réagi et le catalyseur mis en œuvre à la polymérisation, selon lequel on récupère le monomère qui n'a pas réagi, en soumettant le mélange réactionnel provenant de la polymérisation à une détente en présence d'un agent de désactivation du catalyseur et on sépare la polyoléfine sans l'épurer en résidus catalytiques, caractérisé en ce que l'on utilise du monoxyde de carbone comme agent de désactivation.

2. Procédé suivant la revendication 1, caractérisé en ce que l'on opère la polymérisation en présence d'un agent de réglage du poids moléculaire.

3. Procédé suivant la revendication 2, caractérisé en ce que l'agent de réglage du poids moléculaire est l'hydrogène.

4. Procédé suivant l'une quelconque des revendications 1 à 3, caractérisé en ce que l'on met en œuvre le monoxyde de carbone en mélange avec un gaz inerte.

5. Procédé suivant la revendication 4, caractérisé en ce que l'on emploie l'azote comme gaz inerte.

6. Procédé suivant l'une quelconque des revendications 1 à 5, caractérisé en ce que l'on met en œuvre 0,1 mole environ de monoxyde de carbone par mole de composé chloré de titane.

## Patentansprüche

1. Verfahren zur Trennung von Polyolefinen, die unter Niederdruck in Anwesenheit eines Katalysators aus einer chlorierten Titanverbindung hergestellt worden sind, von der aus der Polymerisation stammenden Reaktionsmischung, welche das Polyolefin, nicht-reagierendes Monomeres und den bei der Polymerisation eingesetzten Katalysator enthält, wobei man das nicht-reagierte Monomere wiedergewinnt, indem man die aus der Polymerisation stammende Reaktionsmischung einer Entspannung in Anwesenheit eines den Katalysator desaktivierenden Mittels unterwirft und das Polyolefin abtrennt ohne dieses von den Katalysatorresten zu reinigen, dadurch gekennzeichnet, dass man als Desaktivierungsmittel Kohlenmonoxid verwendet.

2. Verfahren gemäss Anspruch 1, dadurch gekennzeichnet, dass man die Polymerisation in Anwesenheit eines das Molekulargewicht steuernden Mittels durchführt.

3. Verfahren gemäss Anspruch 2, dadurch gekennzeichnet, dass das Mittel zur Steuerung des Molekulargewichts Wasserstoff ist.

4. Verfahren gemäss einem der Ansprüche 1 bis 3, dadurch gekennzeichnet, dass man das Kohlenmonoxid in Mischung mit einem inerten Gas einsetzt.

5. Verfahren gemäss Anspruch 4, dadurch gekennzeichnet, dass man als inertes Gas Stickstoff verwendet.

6. Verfahren gemäss einem der Ansprüche 1 bis 5, dadurch gekennzeichnet, dass man ungefähr 0,1 Mol Kohlenmonoxid je Mol chlorierter Titanverbindung einsetzt.

## Claims

1. Process for the separation of polyolefines, manufactured at low pressure in the presence of a catalyst comprising a chlorinated titanium compound, from the reaction mixture originating from polymerisation and containing the polyolefine, the unreacted monomer and the catalyst used in the polymerisation, wherein the unreacted monomer is recovered by subjecting the reaction mixture originating from polymerisation to a pressure reduction in the presence of a catalyst deactivator, and the polyolefine is separated off without purifying it in respect of catalyst residues, characterised in that carbon monoxide is used as the deactivator.

2. Process according to Claim 1, characterised in that the polymerisation is carried out in the presence of an agent for controlling the molecular weight.

3. Process according to Claim 2, characterised in that the agent for controlling the molecular weight is hydrogen.

4. Process according to any one of Claims 1 to 3, characterised in that the carbon monoxide is used as a mixture with an inert gas.

5. Process according to Claim 4, characterised in that nitrogen is used as the inert gas.

6. Process according to any one of Claims 1 to 5, characterised in that about 0.1 mol of carbon monoxide is used per mol of chlorinated titanium compound.